# FASCICULE DE BREVET EUROPEEN

(11) **EP 2 321 142 B1**
(45) Date de publication et mention de la délivrance du brevet: **19.12.2012**
(21) Numéro de dépôt: 09741399.1
(22) Date de dépôt: 10.09.2009
(51) Int. Cl.: B60L 11/18, B60H 1/00, H01M 10/50

(54) **PROCEDE DE COMMANDE D'UN DISPOSITIF DE THERMOREGULATION D'UNE BATTERIE D'ALIMENTATION D'UN VEHICULE A TRACTION ELECTRIQUE**
VERFAHREN ZUR STEUERUNG EINER WÄRMEREGELVORRICHTUNG FÜR EINE STROMVERSORGUNGSBATTERIE EINES ELEKTROANTRIEBSFAHRZEUGS
METHOD FOR CONTROLLING A THERMOREGULATION DEVICE FOR A POWER SUPPLY BATTERY OF AN ELECTRIC TRACTION VEHICLE

(30) Priorité: 11.09.2008 FR 0856119
(43) Date de publication de la demande: 18.05.2011
(73) Titulaire: Peugeot Citroën Automobiles Société Anonyme, 78140 Vélizy Villacoublay (FR)
(72) Inventeur: ZAMPARUTTI, David, F-92400 Courbevoie (FR); RAGOT, Franck, F-75009 Paris (FR); AYRAULT, Muriel, F-92700 Colombes (FR); HECKETSWEILER, Thierry, F-75014 Paris (FR)
(86) Numéro de dépôt international: PCT/FR2009/051707
(87) Numéro de publication internationale: WO 2010/029263

(56) Documents cités:
- EP-A- 1 504 949
- EP-A- 1 983 603
- WO-A-2007/086231

## Description

La présente invention concerne un procédé de commande d'un dispositif de thermorégulation d'une batterie d'alimentation d'un véhicule à traction électrique.

Plus particulièrement, l'invention est relative à un procédé de commande d'un dispositif de thermorégulation d'une batterie d'alimentation d'un véhicule dont la motorisation fait appel à au moins une motorisation électrique.

Ces véhicules à motorisation électrique ou à motorisation hybride comprenant au moins une source motrice électrique comportent, de façon connue, une batterie capable d'effectuer des cycles de charge/décharge et un moteur électrique utilisant l'énergie électrique de la batterie pour fournir une énergie motrice au véhicule.

Lors de l'utilisation de la batterie et notamment lors des cycles de charge/décharge, la batterie produit de la chaleur provenant notamment du comportement résistif. Cependant, les performances de ce genre de batterie dépendent fortement de sa température de fonctionnement.

En effet, lorsque la température de fonctionnement est élevée, cela provoque d'une part un vieillissement accéléré et une autodécharge importante, et d'autre part, pour des températures supérieures, l'interdiction du fonctionnement de la batterie pour éviter toute dégradation irréversible.

Lorsque la température ambiante est supérieure à la température de la batterie, le flux d'air ambiant ne peut plus être utilisé comme une source de refroidissement nécessaire à l'évacuation de la chaleur produite par les éléments d'accumulateurs de la batterie.

c'est pourquoi, la batterie d'alimentation d'un moteur électrique nécessite l'utilisation d'un dispositif supplémentaire de thermorégulation permettant d'assurer le refroidissement de la batterie.

A cet effet, un fluide caloporteur circule dans un circuit de refroidissement de la batterie, de manière à provoquer des transferts de chaleur entre la batterie et le fluide caloporteur et ainsi réduire la température de la batterie.

De façon connue, un procédé de commande de refroidissement ou de thermorégulation de batterie d'alimentation pilote le dispositif de refroidissement en fonction de la température de la batterie ainsi que de la température du fluide caloriporteur. Cependant, les dispositifs assurant le débit de fluide caloriporteur, tels que par exemple une pompe ou un ventilateur, ont un certain impact sur l'acoustique ou le confort vibratoire ressenti dans l'habitacle par les passagers d'autant plus que le dispositif de refroidissement est généralement situé dans l'habitacle du véhicule. En effet, plus le débit du fluide caloriporteur à fournir est important, plus les bruits et vibrations parasites provenant de dispositifs assurant le débit augmentent. Cette nuisance acoustique est notamment importante lorsque le véhicule est à l'arrêt ou avec une faible vitesse de roulement ; dans cette situation le niveau sonore de l'habitacle est sensiblement réduit, n' ayant pas ou très peu de bruits de roulements, de bruits produits par le moteur thermique, et de bruits aérodynaméques.

Les documents WO 2007 086231 A et EP 1983603 correspondant à WO 2007 086231 A divulguent un procédé de commande d'un ventilateur de refroidissement dans un véhicule notamment à partir de la température de la batterie et du niveau de bruit dans l'habitacle.

Dans ce contexte, l'invention visé à fournir un procédé de commande d'un dispositif de thermorégulation d'une batterie d'alimentation d'un véhicule à traction électrique permettant un refroidissement de la batterie d'alimentation efficace tout en préservant les passagers de nuisances acoustiques.

A cette fin, de l'invention propose un procécé de batterie d'alimentation d'un véhicule à traction électrique refroidie au moyen d'un fluide caloriporteur mis en circulation par des moyens pour appliquer un débit de circulation dudit fluide caloriporteur commandés par ledit dispositif de thermorégulation, ledit procédé de commande comportant :
- une première étape de determination d'un niveau de bruit régnant dans l' habitacle du véhicule, ledit niveau de bruit étant, déterminé en fonction d'au moins une des variables suivantes:, charge du moteur,
   - régime moteur,
   - vitesse du pulseur de climatisation,
   - vitesse du véhicule;
- une deuxième étape de détermination dudit débit de circulation dudit fluide caloporteur à appliquer en fonction de la température de la batterie d'alimention, de la température dudit fluide caloporteur à l'entrée de ladite batterie et dudit niveau de bruit déterminé lors de ladite première étape,
caractérisé en ce qu' il comporte une étape d' acquisition de façon continue de la température du fluide caloporteur à l'entrée de la batterie d'alimentation, de la température de la batterie, de l'intensité de courant traversant la batterie, de la vitesse du véhicule, du régime moteur, la vitesse du pulseur de climatisation, la charge du moteur.

Selon une autre caractéristique, le procédé de commande est tel que ladite première étape comporte :
- première étape de détection d' un premier niveau de bruit en fonction de ladite charge du moteur et dudit régime, moteur;
- une deuxième étape de détection d'un deuxième niveau de bruit en fonction de ladite vitesse du pulseur de climatisation;
- une troisième étape de détection d'un troisième niveau de bruit en fonction de ladite vitesse du véhicule;
ledit niveau de bruit étant déterminé par la valeur maximal desdits niveaux de bruit.

Selon une autre caractéristique, le procédé de commande est tel qu'il comporte une étape de détermination d'un débit de flux caloporteur déterminé en fonction de ladite intensité de courant traversant ladite batterie, de ladite température de ladite batterie et de ladite température du fluide caloporteur à l'entrée de la ; batterie d'alimentation.

Selon une autre caractéristique, le procédé de commande est tel qu'il comporte une étape de détermination d'un débit de flux caloporteur déterminé en fonction d'un flux d'énergie thermique traversant ladite batterie et d'un flux d'énergie thermique évacué par ladite batterie au moyen dudit fluide caloporteur.

Selon une autre caractéristique, le procédé de Commande est tel qu'il comporte une étape de détermination d'un débit de fluide caloporteur pour le refroidissement de la batterie d'alimentation lors de la coupure du groupe moto-propulseur du véhicule, ladite étape comportant :
- une première étape d'évaluation de la nécessité de refroidissement de ladite batterie avec la détermination d'un premier débit de fluide caloporteur en fonction de ladite intensité de courant traversant ladite batterie et de la température de la batterie au moment de la coupure du groupe moto-propulseur;
- une deuxième étape de régulation dudit premier débit de fluide caloporteur avec la détermination d'un deuxième débit en fonction du gradient de température entre ladite température de ladite batterie au moment de la coupure dudit groupe moto-propulseur et ladite température de la batterie ;
- une troisième étape de coordination des différentes informations de ladite première étape et de ladite deuxième étape pour la détermination dudit débit de fluide caloporteur pour le refroidissement de la batterie.

Selon une autre caractéristique, le procédé de commande est tel qu'il comporte une étape de réchauffement de ladite batterie d'alimentation déterminant un débit de fluide caloporteur en fonction de ladite température de ladite batterie et de la température dudit fluide caloporteur à l'entrée de ladite batterie.

Selon une autre caractéristique, le procédé de commande est tel qu'une augmentation du niveau de bruit régnant dans l'habitacle du véhicule implique une augmentation dudit débit maximum de circulation applicable par ledit dispositif.

La présente invention a également pour objet un dispositif de thermorégulation comportant des moyens pour la mise en oeuvre d'un procédé de commande.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est un schéma fonctionnel du procédé de commande d'un dispositif de thermorégulation d'une batterie d'alimentation d'un véhicule à traction électrique selon l'invention ;
- la figure 2 est un schéma fonctionnel illustrant une première étape du procédé de commande d'un dispositif de thermorégulation d'une batterie d'alimentation d'un véhicule à traction électrique selon l'invention ;
- la figure 3 est un schéma fonctionnel illustrant une deuxième étape du procédé de commande d'un dispositif de thermorégulation d'une batterie d'alimentation d'un véhicule à traction électrique selon l'invention ;
- la figure 4 est un schéma fonctionnel illustrant une troisième étape du procédé de commande d'un dispositif de thermorégulation d'une batterie d'alimentation d'un véhicule à traction électrique selon l'invention ;
- la figure 5 est un schéma fonctionnel illustrant une quatrième étape du procédé de commande d'un dispositif de thermorégulation d'une batterie d'alimentation d'un véhicule à traction électrique selon l'invention ;
- la figure 6 est un schéma fonctionnel illustrant une cinquième étape du procédé de commande d'un dispositif de thermorégulation d'une batterie d'alimentation d'un véhicule à traction électrique selon l'invention ;
- la figure 7a illustre sous la forme d'un graphique un exemple d'une répartition d'un premier niveau de bruit déterminé par le procédé de commande en fonction de la charge du moteur thermique et du régime moteur thermique ;
- les figures 7b, 7c et 7d sont des figures illustrant sous la forme d'un graphique des exemples de répartition du débit du flux caloporteur.

Dans toutes les figures, les éléments communs portent les mêmes numéros de référence sauf précision contraire.

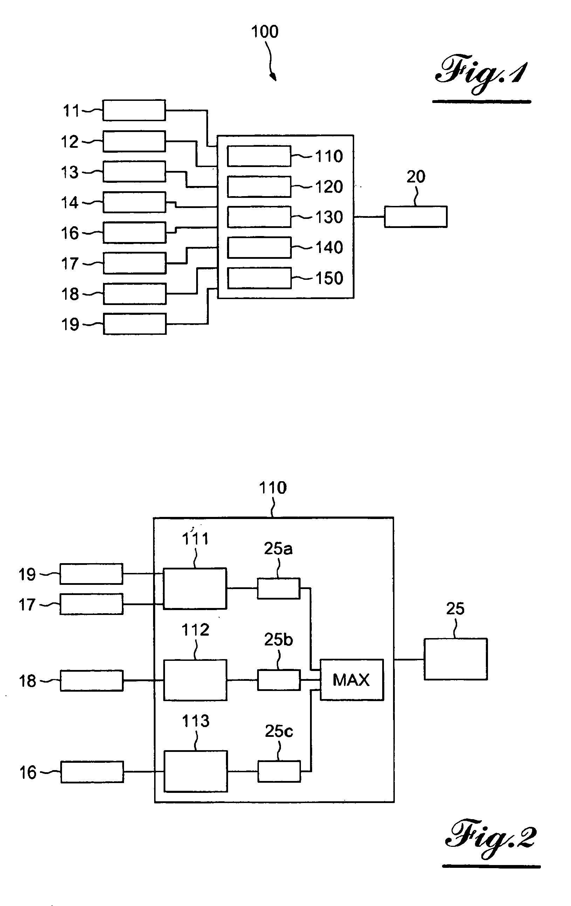

La figure 1 est un schéma fonctionnel d'un procédé de commande 100 d'un dispositif de thermorégulation d'une batterie d'alimentation d'un véhicule à traction électrique selon l'invention.

Le procédé de commande 100 permet de gérer le refroidissement d'une batterie d'alimentation d'un moteur électrique au moyen d'un dispositif de thermorégulation (non représenté) associé à :
- un circuit de refroidissement adjacent à au moins une paroi de la batterie d'alimentation ou intégré à la batterie ;
- un fluide caloriporteur circulant dans le circuit de refroidissement ;
- un moyen du type pompe ou ventilateur permettant de générer un flux du fluide caloporteur dans le circuit de refroidissement.

Le procédé de commande 100, illustré selon le schéma fonctionnel en référence à la figure 1, utilise différentes informations telles que :
- la température du flux caloporteur 11 à l'entrée de la batterie d'alimentation,
- la température du flux caloporteur 12 à la sortie de la batterie d'alimentation,
- la température 13 de la batterie,
- l'intensité de courant 14 traversant la batterie,
- la vitesse du véhicule 16,
- le régime du moteur thermique 17,
- la vitesse du pulseur de climatisation 18,
- la charge du moteur thermique 19.

Ces informations sont utilisées comme données d'entrées pour déterminer au moyen d'une stratégie de commande un débit 20 de flux caloporteur.

Le procédé de commande 100 comportant une pluralité d'étapes 110, 120, 130, 140 150 détaillées en référence aux figures 2 à 6, consiste à déterminer une pluralité de débits de flux caloporteur optimisés, chacun des débits correspondant au mieux à chaque situation de vie de la batterie. Via la pluralité d'étapes 110, 120, 130, 140 et 150, le procédé de commande 100 sélectionne un débit de flux caloporteur final 20 à appliquer au moyen du dispositif de thermorégulation pour le refroidissement de la batterie d'alimentation en sélectionnant le débit maximum parmi ladite pluralité de débits.

Le procédé de commande 100 fournit ainsi un débit du flux calorifique 20 apte au refroidissement de la batterie d'alimentation en prenant en compte les contraintes environnantes, telles que le niveau de bruit dans l'habitacle du véhicule.

Ainsi le procédé de commande 100 permet de limiter sous certaines conditions le débit du flux calorifique tout en anticipant le refroidissement de la batterie lors de fortes sollicitations de celle-ci et en adaptant les besoins de refroidissement de la batterie lorsque le véhicule est à l'arrêt afin de limiter le bruit et la consommation électrique.

La figure 2 est un schéma fonctionnel illustrant une première étape 110 du procédé de commande 100 d'un dispositif de thermorégulation d'une batterie d'alimentation d'un véhicule à traction électrique selon l'invention.

Lors de cette première étape 110, le procédé de commande 100 détermine le niveau de bruit 25 présent dans l'habitacle du véhicule.

Le niveau de bruit 25 correspond à un niveau maximum de bruit provenant de trois sources caractéristiques génératrices de bruit dans un véhicule en fonctionnement ; parmi ces trois sources, on trouve : le bruit provenant du moteur thermique, le bruit du pulseur de climatisation et le bruit de roulage, les trois sources de bruit étant traitées indépendamment par le procédé de commande 100.

Un premier niveau de bruit intermédiaire 25a est déterminé au moyen d'informations d'entrées telles que le régime du moteur thermique 17 et la charge 19 du moteur thermique.

Un deuxième niveau de bruit intermédiaire 25b est déterminé au moyen de la vitesse du pulseur de climatisation 18.

Enfin un troisième niveau de bruit intermédiaire 25c est déterminé au moyen de la vitesse du véhicule 16.

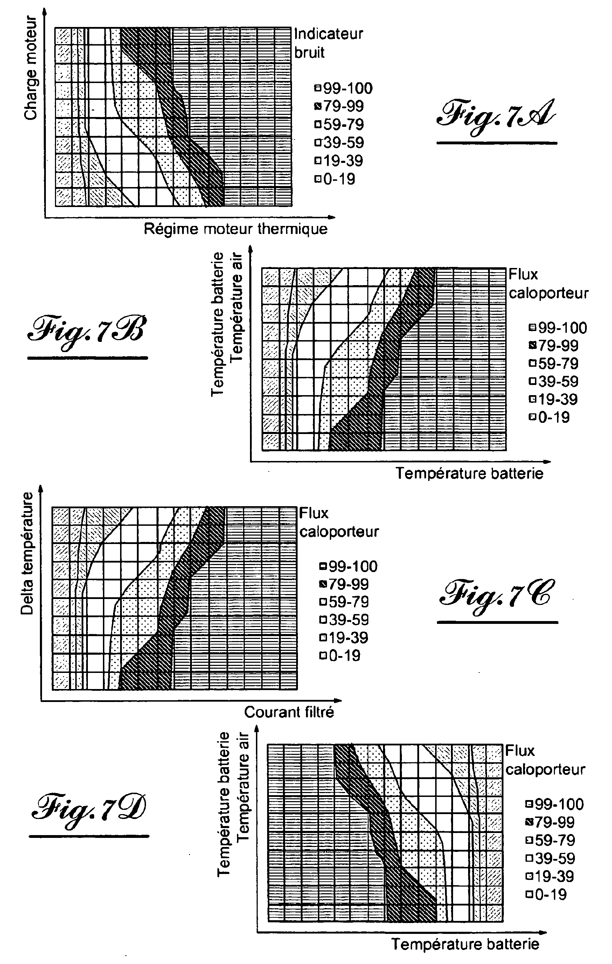

Chacun des trois niveaux de bruit intermédiaires est déterminé selon une loi de répartition propre définissant un niveau de bruit en fonction des informations d'entrées les caractérisant. Un exemple de répartition du premier niveau de bruit intermédiaire 25a est illustré en référence à la figure 7a.

Le niveau de bruit 25 obtenu dans cette première étape 110 est utilisé, par la suite, dans les différentes étapes du procédé de commande 100 du dispositif comme une donnée d'entrée permettant audit procédé de rendre autant que possible le bruit généré par le dispositif de refroidissement imperceptible par rapport au niveau de bruit ambiant.

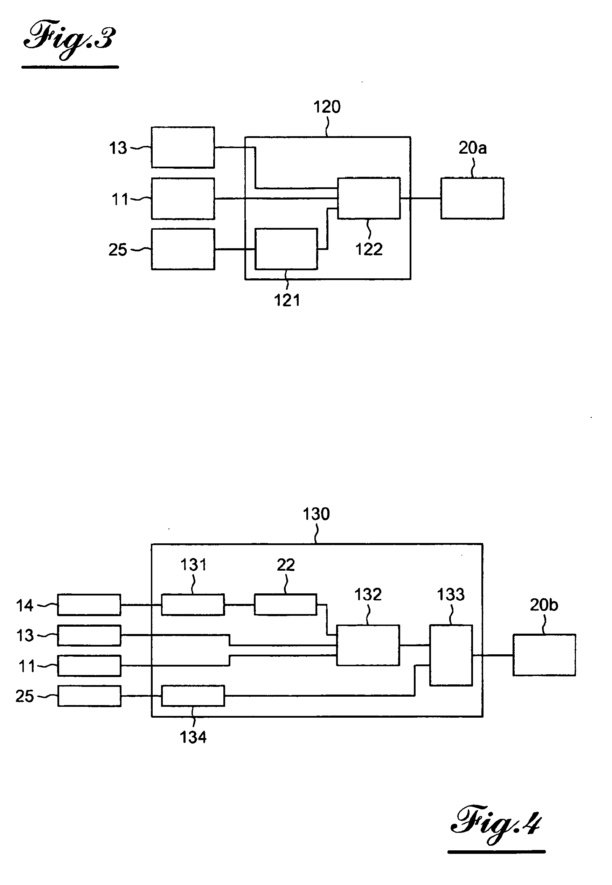

La figure 3 est un schéma fonctionnel illustrant une deuxième étape 120 du procédé de commande 100 d'un dispositif de thermorégulation d'une batterie d'alimentation d'un véhicule à traction électrique selon l'invention.

La deuxième étape 120 permet de déterminer un premier débit du flux caloporteur 20a en fonction de la - température de la batterie 13 et de la température du flux caloporteur 11 en entrée de la batterie permettant de garantir le refroidissement de la batterie lors des cycles de charge ou de décharge de la batterie provoquant son échauffement.

Pour cela, la deuxième étape 120 comporte une première phase 121 de conversion du niveau de bruit 25 déterminé lors de la première étape 110 en un débit maximal de flux caloporteur admissible utilisé comme une donnée d'entrée lors d'une deuxième phase 122 de détermination du débit du flux caloporteur 20a en fonction de la température 13 de la batterie d'alimentation et de la température du flux caloporteur 11 en entrée de la batterie.

La conversion du niveau de bruit 25 en débit maximal de flux caloporteur admissible est réalisée au moyen d'une table de correspondance à une dimension.

Le débit de flux caloporteur 20a déterminé lors de la deuxième étape 120 correspond au débit de flux nécessaire au refroidissement de la batterie d'alimentation en fonction de la température de la batterie 13 et de la différence entre la température 13 de la batterie et de la température du flux caloporteur 11 en entrée de batterie.

On notera que lorsque l'écart entre la température 13 de la batterie d'alimentation et la température du flux caloporteur 11 en entrée de batterie est élevé, le refroidissement de la batterie au moyen du flux caloporteur est plus efficace ce qui se traduira par un débit de flux caloporteur assez faible. Ainsi, la température du flux caloporteur 11 en entrée de batterie détermine la capacité de refroidissement du dispositif.

La détermination du débit de flux caloporteur 20a est réalisée au moyen d'une répartition à deux dimensions illustrée en référence à la figure 7b et est limitée par le débit de flux caloporteur admissible correspondant au niveau de bruit 25 maximum admissible, à la condition que l'échauffement de la batterie ne risque pas de dégrader ses prestations ou de nuire à sa durabilité.

Le procédé de commande 100 prend en compte la limitation du débit du flux caloporteur lors de la détermination du débit de flux caloporteur 20a dans la deuxième phase 122 selon la logique de fonctionnement suivante :
- tant que la température 13 de la batterie est inférieure à la valeur d'un premier seuil déterminé par le constructeur, la limitation du débit du flux, déterminée lors de la première phase 121, est totalement activée afin de privilégier le confort acoustique dans l'habitacle du véhicule. Le débit de flux caloporteur 20a est alors limité par le débit de flux caloporteur admissible déterminée lors de la première phase 121 ;
- lorsque la température 13 de la batterie est supérieure à la valeur d'un second seuil déterminé par le constructeur, la limitation du débit du flux, déterminée lors de la première phase 121, n'est plus prise en compte afin de préserver un refroidissement de la batterie suffisant pour ne pas dégrader les prestations de la batterie. Dans ce cas, le débit du flux caloporteur 20a n'est plus limité par le débit de flux caloporteur admissible, au détriment du confort acoustique ;
- lorsque la température 13 de la batterie est supérieure à la valeur du premier seuil et inférieure à La valeur du second seuil, alors la limitation acoustique est prise en compte selon une loi linéaire. Selon un mode de réalisation de l'invention, le débit du flux caloporteur 20a est déterminé dans cette zone selon une loi linéaire en fonction de la température 13 de la batterie, la loi linéaire passant par deux points dont les coordonnées représentent chacun un des deux cas précédemment détaillés, a savoir une premier point dont les coordonnées s.ont. (valeur premier seuil ; débit du flux admissible) et un second point dont les coordonnées sont (valeur deuxième seuil ; débit du flux non limité).

Ainsi le procédé de commande 100 permet au moyen de la deuxième étape 120 de favoriser la tenue des exigences acoustiques dans des cas d'utilisation où les prestations et la durée de vie de la batterie d'alimentation ne seront pas dégradées.

La figure 4 est un schéma fonctionnel illustrant une troisième étape 130 du procédé de commande 100 d'un dispositif de thermorégulation d'une batterie d'alimentation d'un véhicule à traction électrique selon l'invention.

La troisième étape 130 permet de déterminer un deuxième débit du flux caloporteur 20b en fonction du courant traversant la batterie 14, de la température de la batterie 13 et de la température du flux caloporteur 11 en entrée de la batterie.

Cette troisième étape permet de détecter les fortes sollicitations de la batterie notamment par le courant traversant la batterie afin d'anticiper l'échauffement de la batterie et par conséquent son refroidissement en augmentant la demande en débit du flux caloporteur 20b.

A cet effet, la troisième étape 130 comporte :
- une première phase 134 de conversion du niveau de bruit 25 déterminé lors de la première étape 110 en un débit maximal de flux caloporteur admissible utilisé comme une donnée d'entrée lors de la détermination du débit du flux caloporteur 20b ;
- une deuxième phase 131 de filtrage de l'intensité de courant 14 traversant la batterie au moyen d'un filtre de premier ordre, cette phase permettant en outre d'établir un historique de l'intensité de courant traversant la batterie d'alimentation ;
- une troisième phase 132 dans laquelle le procédé de commande 100 détermine un débit de flux caloporteur minimum au moyen d'une loi de répartition dont un exemple est illustré en référence à la figure 7c et dont les données d'entrées sont d'une part l'intensité du courant filtré 22 et d'autre part la différence de température entre la température de la batterie 13 et de la température du flux caloporteur 11 en entrée de la batterie ;
- une quatrième phase 133 de détermination du débit de flux caloporteur 20b en sélectionnant le débit le plus faible entre le débit de flux caloporteur minimum déterminé lors de la phase 132 et le débit maximal de flux caloporteur admissible déterminé lors de la phase 134, correspondant au niveau de bruit 25 limite admissible.

La conversion du niveau de bruit 25 en débit maximal de flux caloporteur admissible est réalisée au moyen d'une table de correspondance à une dimension, différente de la table de correspondance utilisé lors de la première étape 120.

Dans un deuxième mode de réalisation de l'invention, la troisième étape 130 permettant de détecter un risque d'échauffement de la batterie prend en compte d'une part l'énergie thermique dissipée par effet joule, de la batterie et d'autre part l'énergie thermique évacuée par le flux caloporteur, afin d'en déduire une information sur la nécessité du refroidissement de la batterie permettant d'anticiper le « coup de chaud » de la batterie.

A cet effet, la troisième étape comporte :
- une première phase de conversion du niveau de bruit admissible en un débit du flux caloporteur admissible selon une table de correspondance à une dimension ;
- une deuxième phase de détermination d'un flux d'énergie thermique traversant la batterie correspondant aux pertes par effet Joules lors de la traversée d'un courant dans la batterie, la détermination du flux d'énergie thermique étant réalisé au moyen d'une table de correspondance à une dimension ;
- une troisième phase de détermination d'un flux d'énergie thermique évacué par la batterie, déterminé à partir de la différence de température entre le flux caloporteur en entrée et le flux caloporteur en sortie de la batterie, et du débit du flux caloporteur à l'instant donné ;
- une quatrième phase de détermination d'un débit de flux caloporteur minimum nécessaire au refroidissement de la batterie déterminé en fonction de l'énergie thermique stagnant dans la batterie obtenue par la différence de flux entre le flux d'énergie thermique traversant la batterie et le flux d'énergie thermique évacué par la batterie, et de la différence de température entre la température de batterie et la température du flux caloporteur à l'entrée de la batterie ; la détermination du débit de flux caloporteur nécessaire au refroidissement étant réalisée au moyen d'une table de correspondance à deux dimensions ;
- une cinquième étape de détermination du débit de flux caloporteur en sélectionnant le débit le plus faible entre le débit de flux caloporteur minimum déterminé lors de la quatrième phase et le débit maximal de flux caloporteur admissible déterminé lors de la première phase.

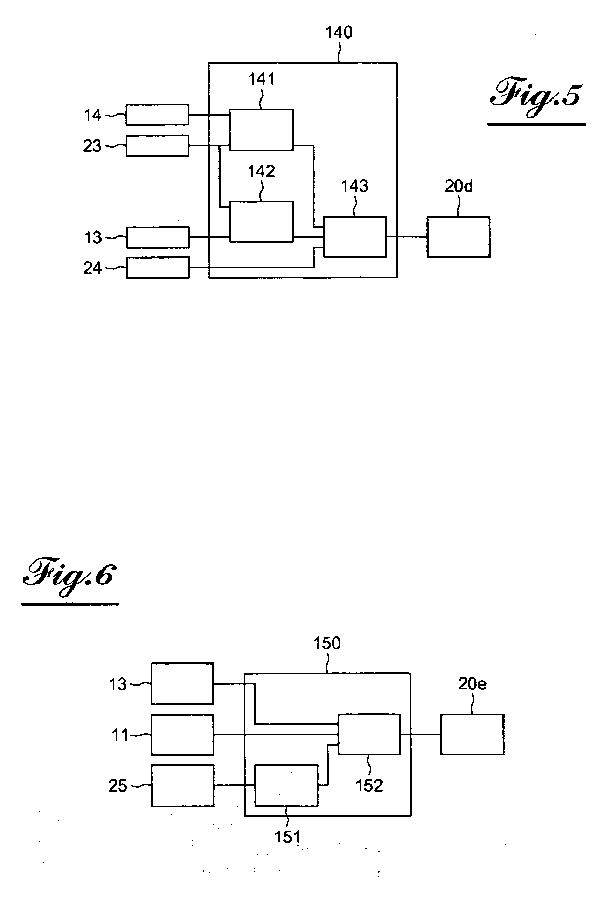

La figure 5 est un schéma fonctionnel illustrant une quatrième étape 140 du procédé de commande 100 d'un dispositif de thermorégulation d'une batterie d'alimentation d'un véhicule à traction électrique selon l'invention.

La quatrième étape 140 permet de réaliser un éventuel refroidissement de la batterie lors de la coupure du groupe moto-propulseur. En effet, lors de la coupure du groupe moto-propulseur, la batterie d'alimentation peut continuer à s'échauffer provoquant par conséquent sa dégradation si elle n'est plus refroidie.

A cette fin, le procédé de commande 100 tient compte, au moyen de cette quatrième étape 140, des exigences de consommations électriques et acoustiques propres à cette situation tout en tentant compte de l'efficacité du refroidissement pour la détermination de la durée et d'un débit du flux caloporteur 20d à appliquer au moyen du dispositif de thermorégulation.

A cet effet, la quatrième étape 140 comporte :
- une première phase 141 évaluant la nécessité d'un refroidissement de la batterie lors d'une coupure du groupe moto-propulseur, et déterminant le cas échéant un débit de flux caloporteur à appliquer ainsi que la durée du débit. Ces critères sont déterminés à partir de l'intensité de courant 14 traversant la batterie qui est au préalablement filtré et de la température 23 de la batterie mesurée au moment de la coupure du groupe moto-propulseur ;
- une deuxième phase 142 déterminant des nouveaux critères de durée et de débit de flux caloporteur à appliquer en fonction de l'efficacité du refroidissement ; en effet, lors de cette deuxième phase un gradient de température est déterminé entre la température 13 réelle de la batterie et la température 23 de la batterie mesurée à la coupure du groupe moto-propulseur ;
- une troisième phase 143 coordonnant les informations de durée et de débit de flux caloporteur fournies lors de la première phase 141 et de la deuxième phase 142, afin de déterminer un débit de flux caloporteur 20d à appliquer ; ladite troisième phase 143 recevant une information 24 sur l'état du moteur.

La figure 6 est un schéma fonctionnel illustrant une cinquième étape 150 du procédé de commande 100 d'un dispositif de thermorégulation d'une batterie d'alimentation d'un véhicule à traction électrique selon l'invention.

La cinquième étape 150 permet de réaliser un réchauffement éventuel de la batterie lorsque sa température est basse. En effet, les performances d'une batterie d'alimentation électrique sont relativement réduites lorsque sa température est trop basse.

Pour cela, le procédé de commande comporte :
- une première phase 151 de conversion du niveau de bruit 25 déterminé lors de la première étape 110 en un débit maximal de flux caloporteur admissible utilisé comme une donnée d'entrée lors de la détermination d'un débit du flux caloporteur 20e ;
- une deuxième phase 152 de détermination du débit du flux caloporteur 20e de réchauffement en fonction de la température de la batterie 13 et de la différence entre la température 13 de la batterie et de la température du flux caloporteur 11 en entrée de batterie.

La conversion du niveau de bruit 25 en débit maximal de flux caloporteur admissible est réalisée au moyen d'une table de correspondance à une dimension, différente de la table de correspondance utilisée lors de la première étape 120 et de la deuxième étape 130.

La détermination du débit de flux caloporteur 20e est réalisée au moyen d'une répartition à deux dimensions illustrée en référence à la figure 7d et est limitée par le débit de flux caloporteur admissible correspondant au niveau de bruit 25 maximum admissible afin de limiter les nuisances acoustiques dans l'habitacle du véhicule.

La figure 7a illustre sous la forme d'un graphique un exemple d'une répartition du premier niveau de bruit intermédiaire 25a déterminé par le procédé de commande 100 en fonction de la charge du moteur thermique 19 et du régime moteur thermique 17.

Chaque condition de charge moteur 19 et de régime moteur 17 correspond à un niveau de bruit.

L'ensemble des combinaisons charge moteur 19/régime moteur 17 est représenté sur le graphique en référence à la figure 7a par un niveau de bruit 25a. Dans un souci de représentativité, les niveaux de bruit 25a sont répartis selon 6 plages : 0-19 ; 19-39 ; 39-59 ; 59-79 ; 79-99 ; 99-100, où 0 indique un niveau de bruit extrêmement faible et 100 un niveau de bruit élevé.

Il est à noter que la répartition du niveau de bruit 25a avec des plages de représentation plus petites, par exemple de 1 à 5, permettrait de préciser le graphique et la valeur du niveau de bruit 25a pour chaque situation de charge moteur et de régime moteur.

Chaque niveau de bruit intermédiaire 25b et 25c est déterminé selon une répartition similaire à la répartition illustrée en référence à la figure 7a, avec seulement une dimension au lieu de deux.

Les figures 7b, 7c et 7d sont des figures illustrant sous la forme d'un graphique des exemples de répartition du débit du flux caloporteur, respectivement 20a, 20b et 20e.

Dans un souci de représentativité, les débits du flux caloporteur 20a, 20b et 20e sont répartis selon 6 plages de valeur correspondant à un pourcentage du débit maximal : 1-19 % ; 19-39 % ; 39-59 % ; 59-79 % ; 79-99 % ; 99-100 %.

Il est à noter que la répartition des débits 20a, 20b et 20e avec des plages de valeurs plus petites, par exemple de 1 à 5 %, permettrait de préciser le graphique et la valeur des débits 20a, 20b et 20e pour chaque situation.

La figure 7b illustre un exemple d'une répartition du débit du flux caloporteur 20a déterminé par le procédé de commande 100, lors de la deuxième étape 120, en fonction de la température de la batterie 13 et de la différence entre la température 13 de la batterie et de la température du flux caloporteur 11 en entrée de batterie.

La figure 7c illustre un exemple d'une répartition du débit du flux caloporteur 20b déterminé par le procédé de commande 100, lors de la troisième étape 130, en fonction de l'intensité du courant filtré 22 et de la différence de température entre la température de la batterie 13 et de la température du flux caloporteur 11 en entrée de la batterie.

La figure 7d illustre un exemple d'une répartition du débit du flux caloporteur 20e déterminé par le procédé de commande 100, lors de la cinquième 150, en fonction de la température de la batterie 13 et de la différence entre la température 13 de la batterie et de la température du flux caloporteur 11 en entrée de batterie.

Ainsi, le procédé de commande selon l'invention propose une gestion active du refroidissement d'une batterie d'alimentation d'un véhicule à traction électrique sans dégradation du niveau sonore de l'habitacle.

Selon les différents paramètres de température tels que la température de la batterie et la température du flux calorifique ainsi que la détermination d'un niveau de bruit présent dans l'habitacle, le procédé de commande fournit au moyen du dispositif de thermorégulation un débit de flux calorifique adapté à chaque situation en privilégiant le confort acoustique des passagers et en adaptant le flux caloporteur au juste besoin et en anticipant les fortes sollicitations.

Les autres avantages de l'invention sont notamment les suivants :
- la gestion active du refroidissement permet de réduire la consommation énergétique ;
- la gestion active du refroidissement permet d'augmenter la durée de vie de la batterie.
- la gestion active du refroidissement permet de fournir le refroidissement nécessaire lorsque le véhicule roule ou est à l'arrêt ;
- anticipation des fortes sollicitations en courant afin de préserver la disponibilité des batteries et leur durée de vie ;
- exploitation favorisée de la batterie lors de conditions climatiques difficiles.

## Revendications

1. Procédé de commande (100) d'un dispositif de thermorégulation d'une batterie d'alimentation d'un véhicule à traction électrique refroidie au moyen d'un fluide caloriporteur mis en circulation par des moyens pour appliquer un débit de circulation (20) dudit fluide caloriporteur commandés par ledit dispositif de thermorégulation, ledit procédé de commande (100) comportant :
- une première étape de détermination d'un niveau de bruit (25) régnant dans l'habitacle du véhicule, ledit niveau de bruit (25) étant déterminé en fonction d'au moins une des variables suivantes :
- charge du moteur (19),
- régime moteur (17),
- vitesse du pulseur de climatisation (18),
- vitesse du véhicule (16) ;
- une deuxième étape de détermination dudit débit de circulation (20) dudit fluide caloporteur à appliquer en fonction de la température (13) de la batterie d'alimentation, de la température (11) dudit fluide caloporteur à l'entrée de ladite batterie et dudit niveau de bruit (25) déterminé lors de ladite première étape,
**caractérisé en ce qu'**il comporte une étape d'acquisition de façon continue de la température (11) du fluide caloporteur à l'entrée de la batterie d'alimentation, de la température (13) de la batterie, de l'intensité de courant (14) traversant la batterie, de la vitesse du véhicule (16), du régime moteur (17), la vitesse du pulseur de climatisation (18) et de la charge du moteur (19).

2. Procédé de commande (100) d'un dispositif de thermorégulation d'une batterie d'alimentation d'un véhicule à traction électrique selon la revendication 1 **caractérisé en ce que** ladite première étape comporte :
- une première étape (111) de détection d'un premier niveau de bruit (25a) en fonction de ladite charge du moteur (19) et dudit régime moteur (17) ;
- une deuxième étape (112) de détection d'un deuxième niveau de bruit (25b) en fonction de ladite vitesse du pulseur de climatisation (18) ;
- une troisième étape (113) de détection d'un troisième niveau de bruit (25c) en fonction de ladite vitesse du véhicule (16) ;
ledit niveau de bruit (25) étant déterminé par la valeur maximal desdits niveaux de bruit (25a, 25b, 25c).

3. Procédé de commande (100) d'un dispositif de thermorégulation d'une batterie d'alimentation d'un véhicule à traction électrique selon l'une des revendications 1 ou 2 comportant une étape de détermination d'un débit de flux caloporteur (20b) déterminé en fonction de ladite intensité de courant (14) traversant ladite batterie, de ladite température (13) de ladite batterie et de ladite température (11) du fluide caloporteur à l'entrée de la batterie d'alimentation.

4. Procédé de commande (100) d'un dispositif de thermorégulation d'une batterie d'alimentation d'un véhicule à traction électrique selon l'une des revendications 1 à 3 comportant une étape de détermination d'un débit de flux caloporteur (20b) déterminé en fonction d'un flux d'énergie thermique traversant ladite batterie et d'un flux d'énergie thermique évacué par ladite batterie au moyen dudit fluide caloporteur.

5. Procédé de commande (100) d'un dispositif de thermorégulation d'une batterie d'alimentation d'un véhicule à traction électrique selon l'une des revendications 1 à 4 comportant une étape de détermination d'un débit de fluide caloporteur (20d) pour le refroidissement de la batterie d'alimentation lors de la coupure du groupe moto-propulseur du véhicule, ladite étape comportant :
- une première étape (141) d'évaluation de la nécessité de refroidissement de ladite batterie avec la détermination d'un premier débit de fluide caloporteur en fonction de ladite intensité de courant (14) traversant ladite batterie et de la température (23) de la batterie au moment de la coupure du groupe moto-propulseur ;
- une deuxième étape (142) de régulation dudit premier débit de fluide caloporteur avec la détermination d'un deuxième débit en fonction du gradient de température entre ladite température (23) de ladite batterie au moment de la coupure dudit groupe moto-propulseur et ladite température (13) de la batterie.
- une troisième étape (143) de coordination des différentes informations de ladite première étape (141) et de ladite deuxième étape (142) pour la détermination dudit débit (20d) de fluide caloporteur pour le refroidissement de la batterie.

6. Procédé de commande (100) d'un dispositif de thermorégulation d'une batterie d'alimentation d'un véhicule à traction électrique selon l'une des revendications 1 à 5 comportant une étape de réchauffement de ladite batterie d'alimentation déterminant un débit de fluide caloporteur (20e) en fonction de ladite température (13) de ladite batterie et de la température (11) dudit fluide caloporteur à l'entrée de ladite batterie.

7. Procédé de commande (10) d'un dispositif de thermorégulation d'une batterie d'alimentation d'un véhicule à traction électrique selon l'une des revendications 1 à 6 **caractérisé en ce qu'**une augmentation du niveau de bruit (25) régnant dans l'habitacle du véhicule implique une augmentation dudit débit maximum de circulation (20) applicable par ledit dispositif.

## Claims

1. A method (100) for controlling a thermoregulation device for a power supply battery of an electric traction vehicle, cooled by means of a heat exchange fluid circulated by means for applying a circulation flow rate (20) of the said heat exchange fluid, commanded by the said thermoregulation device, the said controlling method (100) comprising:
- a first step of determining a noise level (25) prevailing in the passenger compartment of the vehicle, the said noise level (25) being determined as a function of at least one of the following variables:
- load of the engine (19),
- engine speed (17),
- speed of the air conditioning pulser (18),
- speed of the vehicle (16);
- a second step of determining the said circulation flow rate (20) of the said heat exchange fluid to be applied as a function of the temperature (13) of the power supply battery, of the temperature (11) of the said heat exchange fluid entering the said battery and of the said noise level (25) determined during the first step,
**characterized in that** it comprises a step of continuous acquisition of the temperature (11) of the heat exchange fluid entering the power supply battery, of the temperature (13) of the battery, of the intensity of current (14) passing through the battery, of the speed of the vehicle (16), of the engine speed (17), the speed of the air-conditioning pulser (18) and of the load of the engine (19).

2. The control method (100) of a thermoregulation device of a power supply battery of an electric traction vehicle according to Claim 1, **characterized in that** the said first step comprises:
- a first step (111) of detection of a first noise level (25a) as a function of the said load of the engine (19) and of the engine speed (17);
- a second step (112) of detection of a second noise level (25b) as a function of the said speed of the air conditioning pulser (18);
- a third step (113) of detection of a third noise level (25c) as a function of the said speed of the vehicle (16);
the said noise level (25) being determined by the maximum value of the said noise levels (25a, 25b, 25c).

3. The control method (100) of a thermoregulation device of a power supply battery of an electric traction vehicle according to one of Claims 1 or 2, comprising a step of determination of a flow rate of heat exchanging flow (20b) determined as a function of the said intensity of current (14) passing through the said battery, of the said temperature (13) of the said battery and of the said temperature (11) of the heat exchange fluid entering the power supply battery.

4. The control method (100) of a thermoregulation device of a power supply battery of an electric traction vehicle according to one of Claims 1 to 3, comprising a step of determination of a flow rate of heat exchanging flow (20b) determined as a function of a flow of thermal energy passing through the said battery and of a flow of thermal energy evacuated by the said battery by means of the said heat exchange fluid.

5. The control method (100) of a thermoregulation device of a power supply battery of an electric traction vehicle according to one of Claims 1 to 4, comprising a step of determination of a flow rate of heat exchange fluid (20d) for the cooling of the power supply battery on cutting off of the power train of the vehicle, the said step comprising:
- a first step (141) of evaluation of the necessity for cooling the said battery with the determination of a first flow rate of heat exchange fluid as a function of the said intensity of current (14) passing through the said battery and of the temperature (23) of the battery at the moment of cutting off the power train;
- a second step (142) of regulation of the said first flow rate of heat exchange fluid with the determination of a second flow rate as a function of the temperature gradient between the said temperature (23) of the said battery at the moment of cutting off the said power train and the said temperature (13) of the battery;
- a third step (143) of coordination of the different data of the said first step (141) and of the said second step (142) for the determination of the said flow rate (20d) of heat exchange fluid for the cooling of the battery.

6. The control method (100) of a thermoregulation device of a power supply battery of an electric traction vehicle according to one of Claims 1 to 5, comprising a step of reheating the said power supply battery determining a flow rate of heat exchange fluid (20e) as a function of the said temperature (13) of the said battery and of the temperature (11) of the said heat exchange fluid on entering the said battery.

7. The control method (10) of a thermoregulation device of a power supply battery of an electric traction vehicle according to one of Claims 1 to 6, **characterized in that** an increase of the noise level (25) prevailing in the passenger compartment of the vehicle involves an increase of the said maximum circulation flow rate (20) applicable by the said device.

## Patentansprüche

1. Steuerverfahren (100) einer Wärmeregelvorrichtung einer Stromversorgungsbatterie eines Elektroantriebsfahrzeugs, die mittels eines Wärmeträgers gekühlt wird, der durch Mittel in Zirkulation gebracht wird, um einen Zirkulationsdurchfluss (20) des Wärmeträgers anzuwenden, die von der Wärmeregelvorrichtung gesteuert werden, wobei das Steuerverfahren (100) Folgendes aufweist:
- einen ersten Schritt zum Bestimmen eines Schallpegels (25), der in der Fahrgastzelle des Fahrzeugs herrscht, wobei der Schallpegel (25) in Abhängigkeit von mindestens einer der folgenden Variablen bestimmt wird:
- Belastung des Motors (19),
- Motordrehzahl (17),
- Drehzahl des Klimaanlagengebläses (18),
- Geschwindigkeit des Fahrzeugs (16),
- einen zweiten Schritt des Bestimmens des Zirkulationsdurchflusses (20) des Wärmeträgers, der in Abhängigkeit von der Temperatur (13) der Stromversorgungsbatterie, der Temperatur (11) des Wärmeträgers an dem Eingang der Batterie und von dem Schallpegel (25), der bei dem ersten Schritt bestimmt wurde, anzuwenden ist,
**dadurch gekennzeichnet, dass** es einen Schritt des ununterbrochenen Erfassens der Temperatur (11) des Wärmeträgers an dem Eingang der Stromversorgungsbatterie, der Temperatur (13) der Batterie, der Stromstärke (14), die die Batterie durchquert, der Geschwindigkeit des Fahrzeugs (16), der Motordrehzahl (17), der Geschwindigkeit des Klimaanlagengebläses (18) und der Belastung des Motors (19) aufweist.

2. Steuerverfahren (100) einer Wärmeregelvorrichtung einer Stromversorgungsbatterie eines Elektroantriebsfahrzeugs nach Anspruch 1, **dadurch gekennzeichnet, dass** der erste Schritt Folgendes aufweist:
- einen ersten Schritt (111) zum Erfassen eines ersten Schallpegels (25a) in Abhängigkeit von der Belastung des Motors (19) und der Motordrehzahl (17),
- einen zweiten Schritt (112) zum Erfassen eines zweiten Schallpegels (25b) in Abhängigkeit von der Geschwindigkeit des Klimaanlagengebläses (18),
- einen dritten Schritt (113) zum Erfassen eines dritten Schallpegels (25c) in Abhängigkeit von der Geschwindigkeit des Fahrzeugs (16),
wobei der Schallpegel (25) durch den maximalen Wert der Schallpegel (25a, 25b, 25c) bestimmt wird.

3. Steuerverfahren (100) einer Wärmeregelvorrichtung einer Stromversorgungsbatterie eines Elektroantriebsfahrzeugs nach einem der Ansprüche 1 oder 2, das einen Schritt des Bestimmens eines Wärmeträgerdurchflusses (20b) aufweist, der in Abhängigkeit von der Stromstärke (14), die die Batterie durchquert, von der Temperatur (13) der Batterie und der Temperatur (11) des Wärmeträgers am Eingang der Stromversorgungsbatterie bestimmt wird.

4. Steuerverfahren (100) einer Wärmeregelvorrichtung einer Stromversorgungsbatterie eines Elektroantriebsfahrzeugs nach einem der Ansprüche 1 bis 3, das einen Schritt des Bestimmens eines Wärmeträgerdurchflusses (20b) aufweist, der in Abhängigkeit von einem Wärmeenergiestrom, der die Batterie durchquert, und von einem Wärmeenergiestrom, der von der Batterie mittels des Wärmeträgers abgeleitet wird, bestimmt wird.

5. Steuerverfahren (100) einer Wärmeregelvorrichtung einer Stromversorgungsbatterie eines Elektroantriebsfahrzeugs nach einem der Ansprüche 1 bis 4, das einen Schritt des Bestimmens eines Wärmeträgerdurchflusses (20d) für das Kühlen der Stromversorgungsbatterie bei dem Unterbrechen des Motorantriebsaggregats des Fahrzeugs aufweist, wobei der Schritt Folgendes aufweist:
- einen ersten Schritt (141) des Schätzens der Kühlungsnotwendigkeit der Batterie mit Bestimmung eines ersten Wärmeträgerdurchflusses in Abhängigkeit von der Stromstärke (14), die die Batterie durchquert, und der Temperatur (23) der Batterie im Augenblick des Abschaltens des Motorantriebsaggregats,
- einen zweiten Schritt (142) des Regelns des ersten Wärmeträgerdurchflusses mit der Bestimmung eines zweiten Durchflusses in Abhängigkeit von dem Wärmegradienten zwischen der Temperatur (23) der Batterie im Augenblick des Abschaltens des Motorantriebsaggregats und der Temperatur (13) der Batterie.
- einen dritten Schritt (143) zur Koordination der unterschiedlichen Informationen des ersten Schritts (141) und des zweiten Schritts (142) zum Bestimmen des Durchflusses (20d) des Wärmeträgers zum Kühlen der Batterie.

6. Steuerverfahren (100) einer Wärmeregelvorrichtung einer Stromversorgungsbatterie eines Elektroantriebsfahrzeugs nach einem der Ansprüche 1 bis 5, das einen Schritt des Aufwärmens der Stromversorgungsbatterie aufweist, der einen Wärmeträgerdurchfluss (20e) in Abhängigkeit von der Temperatur (13) der Batterie und der Temperatur (11) des Wärmeträgers am Eingang der Batterie aufweist.

7. Steuerverfahren (10) einer Wärmeregelvorrichtung einer Stromversorgungsbatterie eines Elektroantriebsfahrzeugs nach einem der Ansprüche 1 bis 6, **dadurch gekennzeichnet, dass** eine Erhöhung des Schallpegels (25), der in dem Fahrgastraum des Fahrzeugs herrscht, eine Erhöhung des maximalen Zirkulationsdurchflusses (20), der von der Vorrichtung anwendbar ist, bedingt.
